Europäisches Patentamt

European Patent Office

Office européen des brevets

(19)

(11) Numéro de publication: **0 243 283**
**B1**

(12) # FASCICULE DE BREVET EUROPEEN

(45) Date de publication du fascicule du brevet:
**11.04.90**

(51) Int. Cl.⁴: **B62D 25/18**, B62D 25/16

(21) Numéro de dépôt: **87420083.5**

(22) Date de dépôt: **26.03.87**

(54) Revêtement anti-projections pour ailes et bavettes de véhicules routiers.

(30) Priorité: **23.04.86 FR 8606559**

(43) Date de publication de la demande:
**28.10.87 Bulletin 87/44**

(45) Mention de la délivrance du brevet:
**11.04.90 Bulletin 90/15**

(84) Etats contractants désignés:
**AT BE CH DE ES GB IT LI NL SE**

(56) Documents cités:
**EP-A- 0 112 694**
**GB-A- 2 078 181**
**GB-A- 2 100 206**
**GB-A- 2 116 132**

(73) Titulaire: **Fichet, Jérôme, La Combe Saint-Clair,
F-07100 Annonay(FR)**

(72) Inventeur: **Fichet, Jacques Frédéric, Lapras de
Mirecouly, F-07100 Annonay Ardèche(FR)**

(74) Mandataire: **Bratel, Gérard, Cabinet GERMAIN &
MAUREAU B.P. 3011, F-69392 Lyon Cédex 03(FR)**

ACTORUM AG

## Description

La présente invention concerne un revêtement anti-projections souple pour ailes et bavettes de véhicules routiers, et autres parties similaires entourant les roues, tel que défini dans le préambule de la revendication 1 et connu par exemple par le document GB-A 2 100 206. Ce revêtement anti-projections est destiné à équiper les ailes, ailerons, bavettes, garde-boue, passages de roues, et autres parties similaires entourant les roues de véhicules routiers de toute nature, et plus particulièrement, quoique non exclusivement, les roues des véhicules utilitaires et de leurs remorques ou semi-remorques.

On sait que, lors du déplacement des véhicules routiers par temps de pluie, ou sur un sol mouillé, il se produit des projections d'eau entraînée et soulevée par les roues et formant un brouillard. En l'absence de protection particulière, ces projections d'eau réduisent la visibilité en arrière et sur les côtés du véhicule concerné et nuisent à la sécurité des véhicules suivants, notamment pour les dépassements. Par ailleurs, les projections d'eau salissent le véhicule lui-même.

Divers dispositifs, visant à éviter les projections d'eau et leurs conséquences fâcheuses et même dangereuses, ont été déjà envisagés:

Ainsi, un dispositif connu est constitué par une feuille de matière plastique, dont une face présente des picots. La feuille possède un poids relativement élevé, et elle ne peut être livrée que sous une forme plane, ce qui interdit son adaptation sur des ailes comportant des formes particulières, et notamment des rebords. Le coût de ce premier dispositif est, par ailleurs, assez élevé.

Un autre type de dispositif anti-projections existant consiste en au moins une grille :

Dans un dispositif particulier (GB-A-2 078 181), il est prévu une seule grille fixée en avant d'une plaque-support. L'ensemble formé par la grille et la plaque est rigide et ne peut pas s'adapter sur un support incurvé. De plus, en raison de l'unicité de la grille, un tel dispositif s'avère peu efficace du point de vue de l'absorption des projections et de la canalisation de l'eau à évacuer.

D'autres dispositifs connus (EP-A-0 112 694 et GB-A-2 100 206) possèdent une pluralité de grilles métalliques, superposées en couches successives. L'ensemble formé par les grilles est assez lourd, et sa rigidité interdit également l'adaptation à des formes diverses d'ailes de véhicules, notamment des formes incurvées. Ces dispositifs sont d'une fabrication coûteuse, car ils réunissent plusieurs grilles de caractéristiques distinctes, par exemple des grilles avec des mailles de section décroissante d'une grille à la suivante. Par ailleurs, la structure résultant de la superposition des grilles est relativement compacte, ce qui limite la capacité d'absorption et d'évacuation de l'eau dans l'épaisseur des dispositifs. Enfin, ces dispositifs étant métalliques craignent la corrosion, aucune protection n'étant prévue.

D'une façon générale, les dispositifs à grilles risquent aussi d'être colmatés par la boue et de ne plus pouvoir remplir leur office s'ils ne sont pas nettoyés.

Enfin, le document GB-A-2 116 132 révèle un dispositif anti-projections réalisé sous la forme d'une nappe unique de fil métallique tricoté, entourée d'un cadre en matière plastique. La nappe, étant unique, constitue une structure trop ajourée pour intercepter efficacement les projections, et d'épaisseur insuffisante pour absorber et canaliser l'eau captée. L'unicité de la nappe de fil tricoté rend aussi ce dispositif insuffisamment résistant mécaniquement, notamment vis-à-vis de la pression de l'eau projetée à grande vitesse qui tend à le déformer.

La présente invention vise à éliminer l'ensemble des inconvénients des dispositifs connus, en fournissant un revêtement anti-projections qui, outre une excellente capacité d'absorption des projections d'eau, possède une souplesse permettant une adaptation aisée sur des supports de toutes formes tout en offrant une stabilité suffisante, reste lui-même léger et de fabrication économique, est protégé contre la corrosion, et ne comporte pas de risque de colmatage.

Ce but est atteint grâce aux mesures définies dans la partie caractérisante de la revendication 1.

Le revêtement anti-projections selon l'invention est ainsi constitué par une couche très aérée, donc légère et très absorbante. Ces propriétés avantageuses sont encore renforcées si l'on prévoit que les différentes nappes de fil métallique tricoté sont gaufrées, en présentant par exemple des ondulations suivant une direction déterminée, sur toute leur étendue. Une fois mis en place, ce revêtement absorbe efficacement les projections d'eau, en évitant toutes éclaboussures et tous rebondissements, l'eau captée étant canalisée dans l'épaisseur du matelas et contre la surface du support, pour être finalement éliminée par gravité au point le plus bas, sans qu'il se produise aucune retenue d'eau dans le revêtement. De ce fait, la formation de brouillard est supprimée, et un gain de visibilité est obtenu, procurant une sécurité totale pour les véhicules suivants, notamment lors des dépassements. Le dispositif contribue également au maintien de la propreté du véhicule lui-même, sur lequel il est installé.

La superposition de plusieurs nappes conduit à un compromis avantageux sur le plan mécanique, le dispositif selon l'invention étant ainsi résistant vis-à-vis de la pression de l'eau projetée, tout en restant souple et déformable ce qui permet de l'adapter à des supports de toutes formes, en particulier pour suivre des courbures. La souplesse au revêtement lui permet aussi d'absorber sans dommages les chocs éventuels et les déformations, tels que ceux subis par les bavettes habituelles en caoutchouc.

Par ailleurs, et d'une manière surprenante, lorsque le véhicule équipé du dispositif est en mouvement, les nappes de fil tricoté vibrent et s'entrechoquent. Ainsi, le dispositif est soumis à des secousses qui provoquent une accélération de l'évacuation de l'eau, ainsi qu'un effet d'auto-nettoyage évitant le colmatage des mailles par la boue. Ces effets, propres à la réalisation avec plusieurs nappes superposées de fil tricoté, améliorent l'efficacité du dispositif dans des proportions considérables.

Le cadre en matière synthétique surmoulée réunit les différentes nappes, au moins sur les bords du dispositif, pour maintenir le matelas absorbant dans la forme désirée et offrir des points d'appui suffisamment rigides en vue de la fixation de l'ensemble sur une partie du véhicule.

Dans une forme de réalisation particulière, le cadre surmoulé en matière synthétique forme non seulement des bordures pour le matelas absorbant, mais comporte encore des croisillons formant des nervures de raidissement du matelas, notamment dans le cas d'un dispositif ayant des dimensions importantes. Une âme métallique peut être noyée dans les diverses parties de ce cadre en matière synthétique, pour le rigidifier.

En outre, le cadre surmoulé peut former, le long de certains bords du matelas absorbant, des ailettes sensiblement perpendiculaires à ce matelas, qui complètent le revêtement pour arrêter les projections latérales. Il peut s'agir, notamment, de deux ailettes verticales, situées à hauteur d'une bavette contre laquelle est fixé le revêtement anti-projections.

La fixation de ce revêtement anti-projections sur son support est réalisable par des moyens, tels que goupilles, qui traversent des trous ménagés dans le cadre, lors du surmoulage de celui-ci. L'utilisation d'agrafes est également envisageable, non seulement pour fixer le revêtement sur son support, mais aussi pour lier entre elles les différentes nappes de fil métallique tricoté, ceci en autant de points qu'il paraît souhaitable pour assurer la cohésion du matelas absorbant.

Les nappes du matelas absorbant sont réalisables notamment en fil d'acier tricoté. De préférence, dans chaque nappe, le fil métallique tricoté est enrobé d'une matière synthétique, liant les mailles entre elles. Cette matière, pouvant avoir une épaisseur très fine, assure une protection du fil métallique contre la corrosion due au contact avec l'eau et l'air, et elle réalise une fixation des mailles, évitant ainsi le risque d'un "détricotage", même en cas de rupture localisée du revêtement à la suite d'un choc ou de la projection d'un objet tranchant.

Les nappes de fil métallique tricoté, notamment du genre qui vient d'être précisé, sont réalisables industriellement par mise en oeuvre de techniques connues, permettant une production à un prix de revient modéré. Ces nappes pouvant être stockées et livrées en rouleaux, il est facile de les découper aux dimensions désirées, pour former un revêtement anti-projections adaptable sur tout support existant ou à créer. L'invention peut être ainsi mise en oeuvre de manière économique, et ses possibilités d'application sont illimitées.

De toute façon, l'invention sera mieux comprise à l'aide de la description qui suit, en référence au dessin schématique annexé représentant, à titre d'exemple non limitatif, une forme d'exécution de ce revêtement anti-projections pour ailes et bavettes de véhicules routiers :

Figure 1 est une vue de côté montrant l'arrière d'un véhicule utilitaire équipé du dispositif anti-projections selon l'invention, indiqué en coupe verticale ;

Figure 2 est une vue en perspective du dispositif anti-projections seul ;

Figure 3 en est une vue en coupe horizontale, suivant III-III de figure 1 ;

Figure 4 montre un détail d'une nappe de fil tricoté.

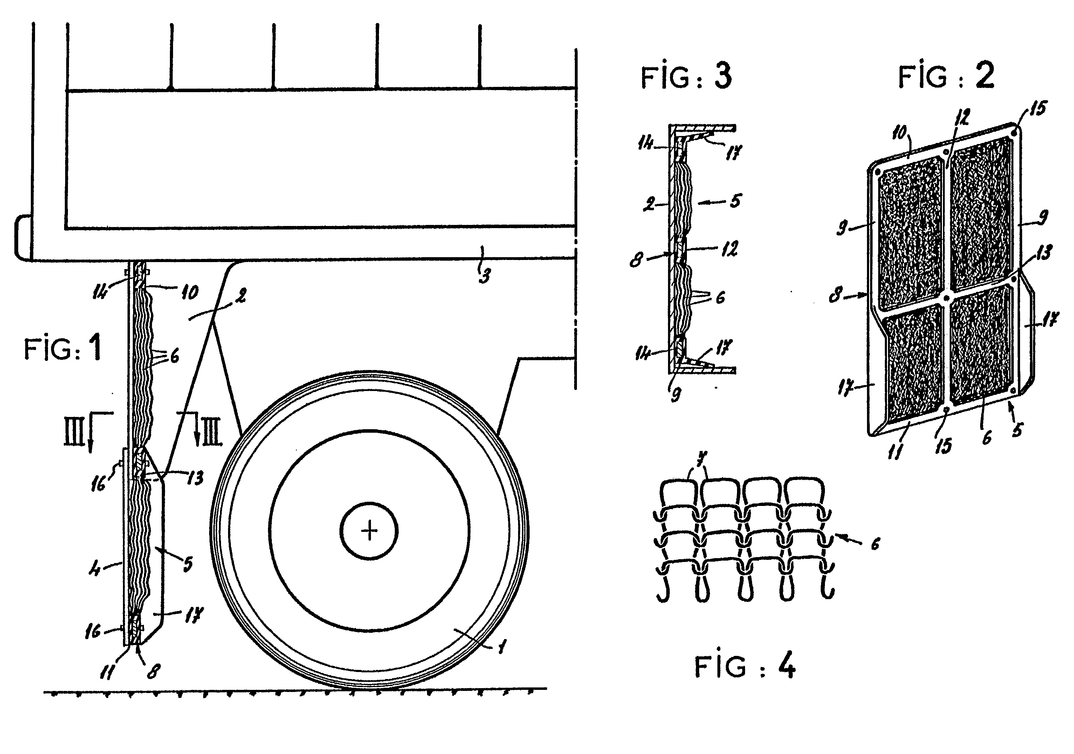

La figure 1 montre très partiellement l'arrière d'un véhicule routier, tel que camion, remorque ou semi-remorque, avec une roue 1 en arrière de laquelle est placé un aileron 2, fixé sous la caisse 3 du véhicule. D'une manière connue, l'aileron 2 est prolongé vers le bas par une bavette souple 4, pouvant être accrochée par tout moyen approprié.

L'ensemble formé par l'aileron 2 et par la bavette 4 reçoit un revêtement anti-projections désigné généralement par le repère 5, et représenté seul sur la figure 2.

Le revêtement anti-projections 5 est constitué essentiellement par un matelas absorbant, formé lui-même par la réunion de plusieurs nappes 6, superposées, qui apparaissent sur les figures 1 et 3. Chaque nappe 6 est réalisée en fil d'acier 7 tricoté, avec une structure telle que celle indiquée à la figure 4, les dimensions de cette nappe en hauteur et en largeur correspondant à celles de l'ensemble formé par l'aileron 2 et par la bavette 4.

Les différentes nappes 6 de fil métallique tricoté 7 présentent sur toute leur étendue un gaufrage, formé par des ondulations orientées suivant une direction déterminée, par exemple en diagonale. Le fil métallique 7 est enrobé d'une matière synthétique protectrice, qui lie les mailles entre elles, aux croisements des têtes des unes avec les pieds des autres.

Sur le matelas absorbant est ajouté, par surmoulage, un cadre 8 réalisé par exemple en polyuréthane. Le cadre surmoulé 8 forme au moins des bordures latérales 9, supérieure 10 et inférieure 11, réunissant les bords de toutes les nappes 6. Ce cadre 8 peut, en outre, comporter des croisillons 12 et 13, de direction verticale, horizontale ou autre, constituant des nervures de raidissement. Les différentes parties 9 à 13 du cadre surmoulé 8 peuvent comporter une âme métallique 14, telle qu'un câble métallique, noyée dans la matière synthétique de ce cadre.

Le cadre surmoulé 8 assure la fixation du matelas absorbant. A cet effet, des trous 15 sont ménagés dans ce cadre 8, par exemple aux quatre angles ainsi qu'aux intersections des croisillons 12,13 et des bordures 9,10 et 11.

Tout le revêtement anti-projections, constitué par les nappes superposées 6 et par le cadre surmoulé 8 comme décrit précédemment, est appliqué et fixé contre la face interne de l'ensemble formé par l'aileron 2 et par la bavette 4, de manière à être placé en regard de la roue 1. La fixation du revêtement 5 est réalisée au moyen de goupilles 16, qui traversent les trous 15 ainsi que la paroi, à savoir l'aileron 2 ou la bavette 4, située derrière ce revêtement.

Dans la partie inférieure du revêtement anti-projections 5, les deux bordures latérales 9 du cadre surmoulé 8 forment des ailettes verticales 17, sensiblement perpendiculaires au matelas absorbant et tournées vers l'avant. Quand le revêtement 5 est mis en place, les deux ailettes 17, situées à hauteur de la bavette 4, forment des protections latérales qui prolongent, vers le bas, les rebords latéraux de l'aileron 2.

Si le véhicule roule sur un sol mouillé, l'eau projetée en arrière par la roue 1 est captée par le matelas absorbant formé par les nappes 6, et elle s'écoule vers le bas dans l'épaisseur de ce matelas, pour s'évacuer par gravité au point le plus bas. Les deux ailettes 17 contribuent à arrêter les projections d'eau latérales.

Bien entendu, l'on ne s'éloignerait pas de l'esprit de l'invention en réalisant le dispositif dans des matériaux autres que ceux mentionnés ici seulement à titre d'exemples, ou encore en réalisant le cadre surmoulé avec des croisillons formant des raidisseurs plus nombreux, notamment dans le cas d'un dispositif anti-projections de dimensions importantes. Les moyens de fixation du revêtement sur son support peuvent être très divers, les goupilles traversant les trous du cadre surmoulé étant remplaçables par des vis, des rivets ou autres. Il est également possible de fixer les nappes de fil métallique tricoté directement sur le support, ceci au moyen d'agrafes qui servent aussi à lier entre elles ces nappes. Par ailleurs, le revêtement anti-projections selon l'invention est utilisable, dans toutes formes et dimensions, non seulement sur des ailerons et bavettes situés à l'arrière des roues, mais encore sur toutes parties telles qu'ailes, garde-boue, dessous de caisse, passage de roues, etc... situées à l'arrière, à l'avant, au-dessus ou sur les côtés des roues. Enfin, le domaine d'application de l'invention n'est nullement limité aux véhicules utilitaires, et il englobe de façon plus générale tous les véhicules routiers, y compris les voitures de tourisme.

## Revendications

1. Revêtement anti-projections pour ailes et bavettes de véhicules routiers, et autres parties similaires entourant les roues, ce revêtement anti-projections (5) comprenant une pluralité de nappes (6) en fil métallique (7), superposées et réunies sur leurs bords, l'ensemble étant applicable contre un support (2, 4) et étant prévu pour capter et évacuer des projections d'eau en les canalisant dans son épaisseur, caractérisé en ce que les nappes superposées sont des nappes (6) en fil métallique tricoté, dont l'ensemble forme un matelas absorbant non compact et souple, et en ce que ces nappes (6) en fil métallique tricoté sont toutes réunies sur leurs bord par un cadre en matière plastique surmoulé (8) servant également à la fixation du revêtement anti-projections (5) sur son support (2, 4).

2. Revêtement anti-projections selon la revendication 1, caractérisé en ce que les différentes nappes (6) de fil métallique tricoté (7), le constituant, sont gaufrées.

3. Revêtement anti-projections selon la revendication 2, caractérisé en ce que les différents nappes (6) de fil métallique tricoté (7), le constituant, présentent des ondulations suivant une direction déterminée, sur toute leur étendue.

4. Revêtement anti-projections selon l'une quelconque des revendications 1 à 3, caractérisé en ce que les différentes nappes (6), le constituant, sont réalisées en fil d'acier tricoté (7).

5. Revêtement anti-projections selon l'une quelconque des revendications 1 à 4, caractérisé en ce que, dans chaque nappe (6), le fil métallique tricoté (7) est enrobé d'une matière synthétique, liant les mailles entre elles.

6. Revêtement anti-projections selon l'une quelconque des revendications 1 à 5, caractérisé en ce que le cadre surmoulé (8), en matière synthétique, forme non seulement des bordures (9,10,11) pour le matelas absorbant, mais comporte encore des croisillons (12,13) formant des nervures de raidissement du matelas.

7. Revêtement anti-projections selon l'une quelconque des revendications 1 à 6, caractérisé en ce qu'une âme métallique (14) est noyée dans les différentes parties (9 à 13) du cadre en matière synthétique (8).

8. Revêtement anti-projections selon l'une quelconque des revendications 1 à 7, caractérisé en ce que le cadre surmoulé (8) forme, le long de certains bords du matelas absorbant, des ailettes (17) sensiblement perpendiculaires à ce matelas.

9. Revêtement anti-projections selon l'une quelconque des revendications 1 à 8, caractérisé en ce que le cadre surmoulé (8) comporte des trous (15), pour la fixation du revêtement (5) sur son support (2,4) par des moyens, tels que goupilles (16).

10. Revêtement anti-projections selon l'une quelconque des revendications 1 à 9, caractérisé en ce que des agrafes sont prévues pour la fixation du revêtement (5) sur son support (2,4) et/ou pour lier entre elles les différentes nappes (6) de fil métallique tricoté (7).

## Claims

1. Anti-spray sheathing for the wings, mud-flaps, and similar items surrounding the wheels of road vehicles, this anti-spray sheathing (5) comprising a number of superimposed layers (6) of metallic wire (7) joined together at their edges, the whole being positionable against a support (2, 4) and being provided to capture sprays of water and to discharge them by channelling them in its interior, characterized in that the superimposed layers are layers (6) of knitted metallic wire, the whole of which forms a non-compact, flexible, absorbent mattress, and in that these layers (6) of knitted metallic wire are all joined together at their edges by a moulded-on frame (8) of plastics material that also serves to fix the anti-spray sheathing (5) to its support (2, 4).

2. Anti-spray sheathing according to Claim 1, characterized in that the different layers (6) of knitted metallic wire (7) that form it are embossed.

3. Anti-spray sheathing according to Claim 2, characterized in that the different layers (6) of knitted metallic wire (7) that form it exhibit wave formations following a specified direction over the whole of their extent.

4. Anti-spray sheathing according to any of Claims 1 to 3, characterized in that the different layers (6) that form it are produced from knitted steel wire (7).

5. Anti-spray sheathing according to any of Claims 1 to 4, characterized in that the knitted metallic wire (7) of each layer (6) is coated with synthetic material binding the knitted stitches together.

6. Anti-spray sheathing according to any of Claims 1 to 5, characterized in that the moulded-on frame (8) of synthetic material not only forms the edges (9, 10, 11) of the absorbent mattress but also comprises cross-pieces (12, 13) forming stiffening ribs of the mattress.

7. Anti-spray sheathing according to any of Claims 1 to 6, characterized in that a metallic core (14) is embedded in the different portions (9 to 13) of the frame (8) of synthetic material.

8. Anti-spray sheathing according to any of Claims 1 to 7, characterized in that the moulded-on frame (8) forms small wings (17) along some of the edges of the absorbent mattress and approximately perpendicular to the mattress.

9. Anti-spray sheathing according to any of Claims 1 to 8, characterized in that the moulded-on frame (8) comprises holes (15) for the sheathing (5) to be fitted to its support (2, 4) by means such as pins (16).

10. Anti-spray sheathing according to any of Claims 1 to 9, characterized in that clips are provided to fix the sheathing (5) to its support (2, 4) and/or to bind together the different layers (6) of knitted metallic wire (7).

**Patentansprüche**

1. Wurfschutzschicht für Kotflügel und Spritzbleche von Straßenfahrzeugen und andere ähnliche, die Räder umgebende Teile, wobei die Wurfschutzschicht (5) eine Mehrzahl von übereinanderliegenden und an ihren Rändern verbundene Schichten (6) aus Draht (7) umfaßt, welche Anordnung an einem Träger (2, 4) anbringbar ist und vorgesehen ist, um Wasserspritzer aufzufangen und zu evakuieren, indem sie diese in ihre Tiefe lenkt, dadurch gekennzeichnet, daß die übereinander angeordneten Schichten Schichten (6) aus gestricktem oder gewirktem Draht sind, deren Anordnung eine nicht kompakte und nachgiebige absorbierende Matte bildet, und daß die Schichten (6) aus gestricktem oder gewirktem Draht alle an ihren Rändern durch einen angeformten oder angegossenen Rahmen (8) aus Kunststoff verbunden sind, der auch zur Befestigung der Wurfschutzschicht (5) an ihrem Träger (2, 4) dient.

2. Wurfschutzschicht gemäß Anspruch 1, dadurch gekennzeichnet, daß die sie bildenden Schichten (6) aus gestricktem oder gewirktem Draht (7) geprägt oder gaufriert sind.

3. Wurfschutzschicht gemäß Anspruch 2, dadurch gekennzeichnet, daß die sie bildenden verschiedenen Schichten (6) aus gestricktem oder gewirktem Draht (7) auf ihrer gesamten Ausdehnung einer bestimmten Richtung folgende Wellen aufweisen.

4. Wurfschutzschicht gemäß einem der Ansprüche 1 bis 3, dadurch gekennzeichnet, daß die sie bildenden Schichten (6) aus gestricktem oder gewirktem Stahldraht (7) ausgeführt sind.

5. Wurfschutzschicht gemäß einem der Ansprüche 1 bis 4, dadurch gekennzeichnet, daß in jeder Schicht (6) der gestrickte oder gewirkte Draht (7) von einem die Maschen untereinander verbindenden Kunststoffmaterial umhüllt ist.

6. Wurfschutzschicht gemäß einem der Ansprüche 1 bis 5, dadurch gekennzeichnet, daß der angeformte Rahmen (8) aus Kunststoff nicht nur Ränder (9, 10, 11) für die absorbierende Matte bildet, sondern auch Rippen zur Versteifung der Matte bildende Querteile (12, 13) umfaßt.

7. Wurfschutzschicht gemäß einem der Ansprüche 1 bis 6, dadurch gekennzeichnet, daß ein metallischer Kern (14) in die verschiedenen Partien (9 bis 13) des Kunststoffrahmens (8) eingelassen ist.

8. Wurfschutzschicht gemäß einem der Ansprüche 1 bis 7, dadurch gekennzeichnet, daß der angeformte Rahmen (8) entlang bestimmter Ränder der absorbierenden Matte zu dieser Matte im wesentlichen senkrechte Flügel (17) bildet.

9. Wurfschutzschicht gemäß einem der Ansprüche 1 bis 8, dadurch gekennzeichnet, daß der angeformte Rahmen (8) Durchbrechungen (15) umfaßt, für die Befestigung der Schicht (5) an ihrem Träger (2, 4) mit Mitteln wie Stiften (16).

10. Wurfschutzschicht gemäß einem der Ansprüche 1 bis 9, dadurch gekennzeichnet, daß Klammern oder Haken vorgesehen sind für die Befestigung der Schicht (5) an ihrem Träger (2, 4) und/oder um die verschiedenen Schichten (6) aus gestricktem oder gewirktem Draht (7) untereinander zu verbinden.

FİG : 1

FİG : 3

FİG : 2

FİG : 4

EP 0 243 283 B1